# FASCICULE DE BREVET EUROPEEN

(11) **EP 3 254 877 B1**
(45) Date de publication et mention de la délivrance du brevet: **26.12.2018**
(21) Numéro de dépôt: 17170528.8
(22) Date de dépôt: 11.05.2017
(51) Int. Cl.: B60J 5/06, B60J 5/04

(54) **DOUBLURE INTERNE D'UNE PORTE LATÉRALE COULISSANTE**
INNENVERKLEIDUNG EINER SEITLICHEN SCHIEBETÜR
INNER LINER OF A SLIDING SIDE DOOR

(30) Priorité: 08.06.2016 FR 1655228
(43) Date de publication de la demande: 13.12.2017
(73) Titulaire: PSA Automobiles SA, 78300 Poissy (FR)
(72) Inventeur: BENANE, SAID, 94550 CHEVILLY LARUE (FR)

(56) Documents cités:
- FR-A1- 2 658 762
- US-A1- 2008 030 047

## Description

La présente invention concerne une doublure interne d'une porte latérale coulissante d'un véhicule.

Les portes latérales coulissantes sont largement utilisées, non seulement dans les véhicules utilitaires (camionnettes, fourgons, etc.), mais également dans les véhicules particuliers de type monospace, où elles tendent à se généraliser en raison de leurs avantages en termes d'accessibilité au pavillon et de faible encombrement latéral à l'ouverture.

Une porte latérale coulissante d'un véhicule comprend généralement une peau externe et une doublure interne, qui sont fixées l'une à l'autre.

La doublure interne permet notamment de réduire les vibrations de la porte latérale lorsque le véhicule est en circulation, et d'absorber une partie des forces lorsque le véhicule subit un choc.

Pour réduire encore plus les vibrations et/ou améliorer l'absorption des forces, la porte latérale coulissante peut en outre comporter des moyens de renfort.

Le document US8303028 décrit une porte latérale coulissante comportant un élément de renfort disposé entre la peau externe et un rail de coulissement de la porte. Le document FR 2 658 762 A1 décrit une porte latérale coulissante comportant une portion supérieure et une portion inférieure.

Le document US6227609 décrit un élément de renfort disposé entre la doublure interne et la peau externe. Le document US 2008/0030047 A1 décrit un véhicule comportant un volet arrière de coffre rigide et léger.

Cependant, les éléments de renfort décrit dans ces documents ne permettent pas d'optimiser les prestations (fatigue, raideur) de tenue de la porte latérale coulissante, ni la transmission des forces entre la doublure interne et la peau externe.

En outre, les doublures internes et les éléments de renfort augmentent sensiblement le poids du véhicule, et il est donc important de limiter leur poids autant que possible.

Il existe donc un besoin de doublures internes, qui permettent d'optimiser les prestations de tenue d'une porte latérale coulissante, et la répartition des forces, tout en limitant l'augmentation de poids du véhicule.

La présente invention vient améliorer la situation.

A cet effet, l'invention propose une doublure interne d'une porte latérale coulissante d'un véhicule. La doublure interne comporte une portion supérieure et une portion inférieure. La portion inférieure comprend :
- deux ouvertures,
- une bretelle, séparant les ouvertures, et
- une entretoise de renfort, solidaire de ladite bretelle, comportant un ensemble de zones d'appui destinées à venir en appui et à être fixées sur une peau externe de la porte latérale coulissante.

La doublure interne et l'entretoise de renfort sont réalisées de manière monobloc, par exemple par emboutissage de la doublure interne.

Selon un mode de réalisation de l'invention, l'entretoise de renfort comporte une aile supérieure et une aile inférieure, chacune desdites ailes présentant une forme rectangulaire et s'étendant depuis la bretelle.

Chacune desdites ailes comprend dans ce cas un bord solidaire de la bretelle. L'un des bords de l'aile supérieure est solidaire d'un des bords de la bretelle situé le long d'une des ouvertures, et l'un des bords de l'aile inférieure est solidaire d'un autre bord de la bretelle situé le long de l'autre ouverture. L'ensemble des zones d'appui comprennent une zone d'appui supérieure, agencée au niveau du bord libre de l'aile supérieure opposé au bord solidaire de la bretelle, et une zone d'appui inférieure, agencée au niveau du bord libre de l'aile inférieure opposé au bord solidaire de la bretelle.

L'aile inférieure peut présenter une longueur, définie selon un axe longitudinal du véhicule lorsque la porte comprenant la doublure est installée sur un véhicule, supérieure à la longueur de l'aile supérieure.

L'angle d'inclinaison entre lesdites ailes est par exemple d'environ 90° par rapport à un axe dit vertical correspondant à l'axe vertical du véhicule lorsque la porte comprenant la doublure est installée sur ledit véhicule.

L'invention porte aussi sur une porte latérale coulissante qui comporte une doublure interne telle que décrite ci-dessus, et une peau externe, les zones d'appuis étant fixées à la peau externe.

L'invention propose également un véhicule comportant une porte latérale coulissante telle que décrite ci-dessus
Le véhicule peut comporter en outre un siège comprenant une assise et un dossier. Dans ce cas, la bretelle de la doublure interne est sensiblement en vis-à-vis de l'assise dudit siège. De préférence, la bretelle est selon un axe sensiblement parallèle à l'axe longitudinal du véhicule.

D'autres caractéristiques et avantages de l'invention apparaîtront encore à la lecture de la description qui va suivre. Celle-ci est purement illustrative et doit être lue en regard des dessins annexés sur lesquels :
- la Figure 1 est une vue partielle en perspective d'un véhicule selon un mode de réalisation de l'invention ;
- la Figure 2 est une vue en semi-transparence du véhicule de la Figure 1 ;
- les Figures 3 et 4 sont des vues, selon deux perspectives, d'une doublure interne d'une porte latérale coulissante du véhicule de la Figure 1 ; et
- les Figures 5 et 6 sont des vues partielles de la doublure interne des Figures 3 et 4, selon deux perspectives, montrant plus en détails une entretoise de renfort de la doublure interne.

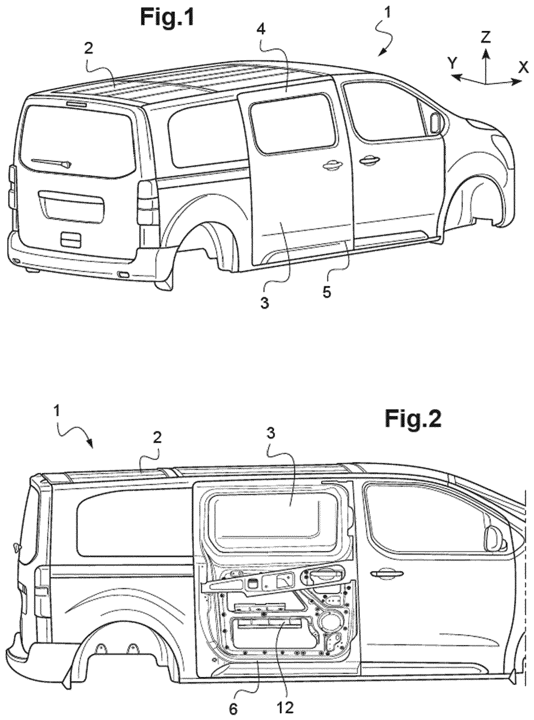

Les Figure 1 et 2 représentent un véhicule 1, selon un mode de réalisation de l'invention.

Le véhicule 1 comporte une caisse 2, qui définit un espace intérieur, destiné à être aménagé en tant que véhicule particulier ou en tant que véhicule utilitaire.

On définit par rapport au véhicule 1 un repère orthogonal XYZ comprenant trois axes perpendiculaires deux à deux, à savoir : un axe X, définissant une direction longitudinale, horizontale, correspondant à la direction générale de déplacement du véhicule, un axe Y, définissant une direction transversale, horizontale, qui avec l'axe X définit un plan XY horizontal, et un axe Z, définissant une direction verticale, perpendiculaire au plan XY horizontal.

La caisse 2 du véhicule 1 automobile comprend une porte latérale coulissante 3, qui est mobile entre une position fermée (représentée sur la Figure 1), dans laquelle la porte 3 obstrue une ouverture 4 formée dans la caisse 2, et une position ouverte (non représentée), dans laquelle la porte 3 est écartée de l'ouverture 4.

Le déplacement de la porte 3 entre sa position fermée et sa position ouverte correspond à une translation suivant l'axe X.

La porte 3 peut en option comporter différents éléments électriques (non représentés), alimentés en énergie par une source de tension du véhicule 1, pour faciliter son ouverture et/ou sa fermeture. Il peut s'agir par exemple d'un mécanisme d'entraînement de la porte 3 permettant une ouverture assistée.

La porte 3 comporte une peau externe 5 et une doublure interne 6, qui sont fixées l'une à l'autre. Sur la Figure 2, la peau externe 5 a été représentée en semi-transparence, pour permettre la représentation de la doublure interne 6.

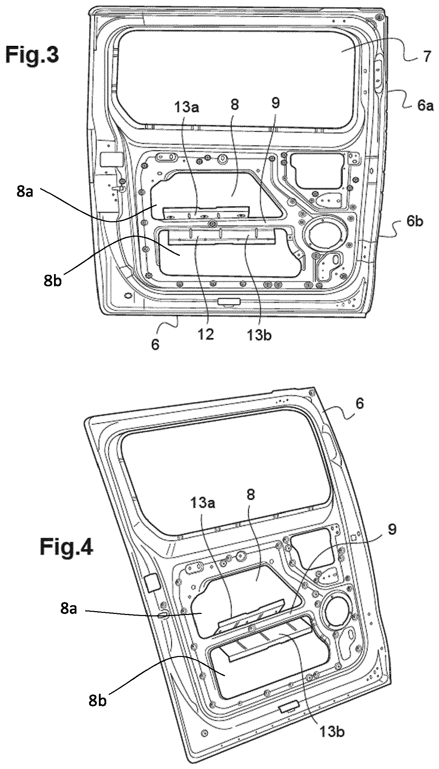

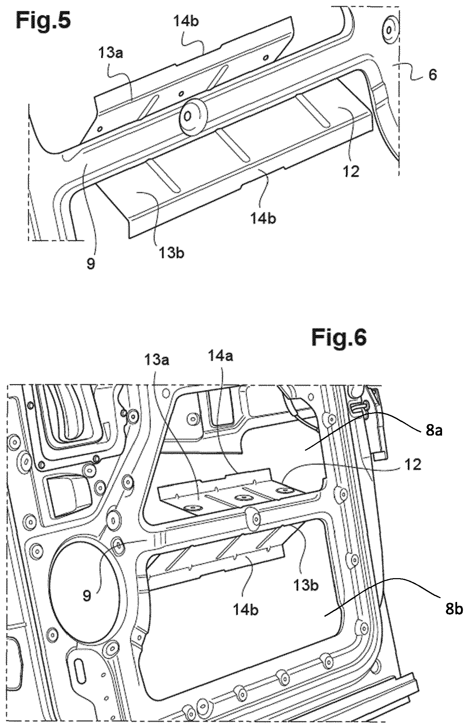

En se référant aux Figures 3 à 6, on décrit ci-dessous plus en détails la doublure interne 6.

La doublure interne 6 comporte une portion supérieure 6a et une portion inférieure 6b.

La portion supérieure 6a comporte un orifice 7, qui, en position de montage, est placé au droit d'une fenêtre de la porte 3.

La portion inférieure 6b comporte deux ouvertures 8a et 8b, disposées l'une au-dessus de l'autre. Les ouvertures 8a et 8b permettent de réduire le poids de la doublure 6, donc du véhicule 1.

La doublure interne 6 comporte une bretelle 9, qui sépare les ouvertures 8a et 8b selon l'axe X, et dont les extrémités sont respectivement solidaires des deux bords latéraux de la doublure 6.

La doublure interne 6 comporte en outre une entretoise de renfort 12, qui a pour fonction de renforcer la porte 3.

La doublure interne 6, la bretelle 9, et l'entretoise de renfort 12 sont réalisées de manière monobloc.

L'entretoise de renfort 12 est par exemple réalisée par emboutissage de la doublure interne 6.

L'entretoise de renfort 12 présente une forme adaptée pour absorber l'effort en cas de choc, ainsi que pour assurer une bonne raideur de la porte latérale coulissante 3.

Pour cela, l'entretoise de renfort 12 comporte par exemple une aile supérieure 13a et une aile inférieure 13b, chaque aile 13a, 13b présentant une forme rectangulaire et s'étendant de manière inclinée depuis la bretelle 9.

La section transversale (plan YZ) de l'entretoise 12 présente par exemple une forme générale de V, la bretelle 9 formant le sommet aplati du V.

Un bord de chaque aile 13a et 13b est solidaire de la bretelle 9, donc de la doublure interne 6. Plus précisément, le bord de chaque aile 13a et 13b solidaire de la bretelle 9 se confond avec un bord différent de la bretelle 9. Le bord de la bretelle 9 le long de l'ouverture 9a forme donc le bord de l'ailette 13a, et le bord de la bretelle 9 le long de l'autre ouverture 9b forme le bord de l'autre ailette 13b.

L'entretoise 12 comporte, au niveau du bord libre de l'aile supérieure 13a opposé au bord solidaire de la bretelle 9, une zone d'appui supérieure 14a, destinée à venir en appui et à être fixée sur la peau externe 5.

De manière similaire, l'entretoise 12 comporte, au niveau du bord libre de l'aile inférieure 13b opposé au bord solidaire de la bretelle 9, une zone d'appui inférieure 14b, destinée à venir en appui et à être fixée sur la peau externe 5.

L'entretoise de renfort 12 forme ainsi une interface entre la doublure interne 6 et la peau externe 5.

La longueur de l'ailette supérieure 13a peut être différente de celle de l'ailette inférieure 13b, la longueur étant la dimension des ailettes 13a et 13b selon l'axe X. Dans le cas d'une doublure dont la bretelle 9 est sensiblement parallèle à cet axe X et les ailettes de forme général rectangulaire, comme illustré en figure 3, la longueur des ailettes 13a et 13b correspond sensiblement à la longueur du bord de ces ailettes 13a et 13b solidaire de la bretelle 9. Cette différence de longueur permet d'ajuster la raideur de la bretelle 9. En effet, comme illustré en figure 3, la forme des ouvertures 8a et 8b séparées par la bretelle peuvent être différentes. Par exemple, l'ouverture 8a, située au-dessus de la bretelle 9 et que l'on nomme ouverture supérieure 8a, comporte un bord formant un angle aigu avec le bord de la bretelle 9 situé le long de cette ouverture supérieure 8a. L'ouverture 8b situé de l'autre côté de la bretelle 9, que l'on nomme ouverture inférieure 8b comporte des bords formant un angle droit avec le bord de ladite bretelle le long de cette ouverture inférieure 8b. La rigidité de la bretelle 9 au niveau de son bord le long de l'ouverture supérieure 8a est alors plus élevée que le long de son bord situé le long de l'ouverture inférieure 8b. La longueur de l'ailette inférieure 13b plus grande que celle de l'ailette supérieure 13a permet d'augmenter la rigidité de la bretelle au niveau du bord de la bretelle 9 le long de l'ouverture inférieure 8b. Par conséquence, cela permet d'obtenir une rigidité sensiblement équivalente au niveau des bords de la bretelle 9 le long de l'ouverture supérieure 8a et de l'ouverture inférieure 8b, malgré la forme différente de ces ouvertures 8a et 8b autour de la bretelle 9. En cas de choc, la bretelle 9 est plus stable et les risques de mouvements parasites, notamment des mouvements de torsion, de cette bretelle 9 sont diminués.

Lorsque le véhicule 1 comporte un siège en vis-à-vis de la porte 3 lorsque ladite porte 3 est en position fermée, la doublure interne 6 est conformée de manière ce que la bretelle 9 soit disposée en vis-à-vis de l'assise dudit siège, et de préférence en vis-à-vis d'une armature rigide de l'assise sur laquelle est située le coussin de cette assise. Cette disposition permet, qu'en cas de choc latéral au niveau de la porte 3, les efforts soient transmis à l'armature rigide de l'assise, limitant ainsi les intrusions et les blessures aux passagers.

L'angle d'inclinaison entre chaque aile 13a et 13b et le plan XZ (donc l'angle entre les ailes 13a et 13b) n'est pas limitatif. Dans l'exemple de réalisation de l'invention représenté, l'angle d'inclinaison entre chaque aile 13a, 13b et le plan XZ est d'environ 45°, donc l'angle entre les ailes 13a et 13b est d'environ 90°. Ces angles peuvent en variante présenter des valeurs différentes.

On décrit ci-dessous le fonctionnement de la porte latérale coulissante 3.

Lorsque le véhicule 1 subit un choc au niveau de la porte 3, les ailes 13a et 13b subissent des efforts de sollicitation.

En conséquence, l'entretoise de renfort 12 a tendance à se déformer.

L'effort est ensuite transmis aux bords latéraux de la doublure interne 6, via la bretelle 9.

Simultanément, les zones d'appui 14a et 14b transmettent l'effort à la peau externe 5.

L'invention permet ainsi une bonne répartition des efforts sur la porte 3, et garantit une bonne raideur de la porte 3, tout en limitant le poids de la doublure 6, donc du véhicule 1.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention.

## Revendications

1. Véhicule (1) comportant une porte latérale coulissante (3), ladite porte latérale coulissante (3) comportant une doublure interne (6) et une peau externe (5), la doublure (6) comportant une portion supérieure (6a) et une portion inférieure (6b), **caractérisé en ce que** la portion inférieure (6b) comprend :
- deux ouvertures (8a, 8b),
- une bretelle (9), séparant lesdites ouvertures (8a, 8b), et
- une entretoise de renfort (12) solidaire de ladite bretelle (9), comportant un ensemble de zones d'appui (14a, 14b) fixées à la peau externe (5),
la doublure interne (6) et l'entretoise de renfort (12) étant réalisées de manière monobloc, le véhicule (1) comportant en outre un siège comprenant une assise et un dossier, la bretelle (9) se trouvant sensiblement en vis-à-vis de l'assise dudit siège.

2. Véhicule (1) selon la revendication 1, **caractérisée en ce que** l'entretoise de renfort (12) est réalisée par emboutissage de la doublure interne (6).

3. Véhicule (1) selon la revendication 1 ou 2, **caractérisée en ce que** l'entretoise de renfort (12) comporte une aile supérieure (13a) et une aile inférieure (13b), chacune desdites ailes (13a, 13b) présentant une forme sensiblement rectangulaire et s'étendant depuis la bretelle (9), l'un des bords de l'aile supérieure (13a) étant solidaire d'un des bords de la bretelle (9) situé le long d'une des ouvertures (8a, 8b) et l'un des bords de l'aile inférieure (13b) étant solidaire d'un autre bord de la bretelle (9) situé le long de l'autre ouverture (8b, 8a), l'ensemble des zones d'appui comprenant une zone d'appui supérieure (14a), agencée au niveau du bord libre de l'aile supérieure (13a) opposé au bord solidaire de la bretelle (9), et une zone d'appui inférieure (14b), agencée au niveau du bord libre de l'aile inférieure (13b) opposé au bord solidaire de la bretelle (9).

4. Véhicule (1) selon la revendication 3, **caractérisée en ce que** l'aile inférieure (13b) présente une longueur, selon un axe correspondant à l'axe longitudinal du véhicule lorsque la porte (3) comprenant la doublure (6) est installée sur ledit véhicule, supérieure à la longueur de l'aile supérieure (13a) .

5. Véhicule (1) selon la revendication 3 ou 4, **caractérisé en ce que** l'angle d'inclinaison entre lesdites ailes (13a, 13b) est d'environ 90° par rapport à un axe vertical correspondant à l'axe vertical du véhicule (1) lorsque la porte (3) comprenant la doublure interne (6) est installée sur ledit véhicule (1).

## Patentansprüche

1. Fahrzeug (1), das eine seitliche Schiebetür (3) umfasst, wobei die seitliche Schiebetür (3) eine Innenverkleidung (6) und eine Außenhaut (5) umfasst, wobei die Verkleidung (6) einen oberen Abschnitt (6a) und einen unteren Abschnitt (6b) umfasst, **dadurch gekennzeichnet, dass** der untere Abschnitt (6b) Folgendes umfasst:
- zwei Öffnungen (8a, 8b),
- einen Steg (9), der die Öffnungen (8a, 8b) trennt, und
- einen Verstärkungsabstandhalter (12), der fest mit dem Steg (9) verbunden ist, der eine Einheit von Auflagezonen (14a, 14b) umfasst, die an der Außenhaut (5) befestigt sind,
wobei die Innenverkleidung (6) und der Verstärkungsabstandhalter (12) aus einem Stück hergestellt sind, wobei das Fahrzeug (1) außerdem einen Sitz umfasst, der eine Sitzfläche und eine Rückenlehne umfasst, wobei sich der Steg (9) im Wesentlichen gegenüber der Sitzfläche des Sitzes befindet.

2. Fahrzeug (1) nach Anspruch 1, **dadurch gekennzeichnet dass** der Verstärkungsabstandhalter (12) durch Stanzen der Innenverkleidung (6) hergestellt ist.

3. Fahrzeug (1) nach Anspruch 1 oder 2, **dadurch gekennzeichnet, dass** der Verstärkungsabstandhalter (12) einen oberen Flügel (13a) und einen unteren Flügel (13b) umfasst, wobei jeder der Flügel (13a, 13b) eine im Wesentlichen rechteckige Form aufweist und sich von dem Steg (9) erstreckt, wobei einer der Ränder des oberen Flügels (13a) mit einem der Ränder des Stegs (9), der entlang einer der Öffnungen (8a, 8b) liegt, fest verbunden ist, und einer der Ränder des unteren Flügels (13b) mit einem anderen Rand des Stegs (9), der entlang der anderen Öffnung (8b, 8a) liegt, fest verbunden ist, wobei die Einheit der Auflagezonen eine obere Auflagezone (14a) umfasst, die im Bereich des freien Rands des oberen Flügels (13a), der dem Rand, der mit dem Steg (9) fest verbunden ist, entgegengesetzt eingerichtet ist, und eine untere Auflagezone (14b), die im Bereich des freien Rands des unteren Flügels (13b), dem Rand, der mit dem Steg (9) fest verbunden ist, entgegengesetzt eingerichtet ist.

4. Fahrzeug (1) nach Anspruch 3, **dadurch gekennzeichnet, dass** der untere Flügel (13b) eine Länge entlang einer Achse aufweist, die einer Längsachse des Fahrzeugs entspricht, wenn die Tür (3), die die Verkleidung (6) umfasst, auf dem Fahrzeug installiert ist, länger ist als die Länge des oberen Flügels (13a).

5. Fahrzeug (1) nach Anspruch 3 oder 4, **dadurch gekennzeichnet, dass** der Neigungswinkel zwischen den Flügeln (13a, 13b) etwa 90° bezüglich einer vertikalen Achse beträgt, die der vertikalen Achse des Fahrzeugs (1) entspricht, wenn die Tür (3), die die Innenverkleidung (6) umfasst, auf dem Fahrzeug (1) installiert ist.

## Claims

1. A vehicle (1) comprising a sliding side door (3), said sliding side door (3) comprising an inner liner (6) and an outer skin (5), the liner (6) comprising an upper portion (6a) and a lower portion (6b), **characterized in that** the lower portion (6b) includes:
- two openings (8a, 8b),
- a strip (9) separating said openings (8a, 8b), and
- a reinforcement strut (12) integral with said strip (9), comprising a set of support zones (14a, 14b) fixed to the outer skin (5),
the inner liner (6) and the reinforcement strut (12) being formed in a single-piece manner, the vehicle (1) further comprising a seat including a seat bottom and a backrest, the strip (9) being situated substantially opposite the seat bottom of said seat.

2. The vehicle (1) according to Claim 1, **characterized in that** the reinforcement strut (12) is formed by stamping of the inner liner (6).

3. The vehicle (1) according to Claim 1 or 2, **characterized in that** the reinforcement strut (12) comprises an upper wing (13a) and a lower wing (13b), each of said wings (13a, 13b) presenting a substantially rectangular shape and extending from the strip (9), one of the edges of the upper wing (13a) being integral with one of the edges of the strip (9) situated along one of the openings (8a, 8b), and one of the edges of the lower wing (13b) being integral with another edge of the strip (9) situated along the other opening (8b, 8a), the set of support zones including an upper support zone (14a), arranged at the level of the free edge of the upper wing (13a) opposite the integral edge of the strip (9), and a lower support zone (14b), arranged at the level of the free edge of the lower wing (13b) opposite the edge integral with the strip (9).

4. The vehicle (1) according to Claim 3, **characterized in that** the lower wing (13b) presents a length, along an axis corresponding to the longitudinal axis of the vehicle when the door (3) including the liner (6) is installed on said vehicle, greater than the length of the upper wing (13a).

5. The vehicle (1) according to Claim 3 or 4, **characterized in that** the angle of inclination between said wings (13a, 13b) is approximately 90° with respect to a vertical axis corresponding to the vertical axis of the vehicle (1) when the door (3) including the inner liner (6) is installed on said vehicle (1).
